# EUROPEAN PATENT SPECIFICATION

(11) **EP 4 437 850 B1**
(45) Date of publication and mention of the grant of the patent: **02.07.2025**
(21) Application number: 24164143.0
(22) Date of filing: 18.03.2024
(51) Int. Cl.: A21C 3/02, A21C 9/04

(54) **DEVICE FOR PROVIDING A DOUGH SHEET PROVIDED WITH A LAYER OF FAT**
VORRICHTUNG ZUR BEREITSTELLUNG EINES MIT EINER FETTSCHICHT VERSEHENEN TEIGBANDES
DISPOSITIF POUR FOURNIR UNE FEUILLE DE PÂTE POURVUE D'UNE COUCHE DE GRAISSE

(30) Priority: 30.03.2023 NL 2034479
(43) Date of publication of application: 02.10.2024
(73) Proprietor: Radie B.V., 4104 BC Culemborg (NL)
(72) Inventor: VAN BLOKLAND, Johannes Josephus Antonius, Culemborg (NL)
(74) Representative: IP Maison

(56) References cited:
- EP-A2- 0 182 563
- US-A- 3 276 397
- US-A1- 2022 312 780

## Description

The present invention relates to a device for providing a dough sheet with a layer of fat. Such device may be used in a dough line for creating puff pastry, which comprises a laminate formed of alternated dough and fat layers. In order to obtain the highest quality of puff pastry, the amount of dough and fat that the layers comprise is to be determined very precisely. Although modern dough processing techniques have become predictable and reproducible to a very high level, dough and fat may still have fluctuating properties and/or compositions when produced or processed in an industrial environment. Additionally, circumstances like temperature and humidity may be influenced in an unforeseen manner and also have their impact on the dough and fat or the processing thereof. Even time may be of influence, as the fat, for instance formed by butter or margarine or other fatty substances, may be provided in large blocks, which stacked on pallets need a week to have a constant temperature in all butter blocks in a conditioned space. If this time is not there, this is often a cause of inconsistency caused by temperature differences.

Especially in those cases where puff pastry is made in a continuous way, by means of a processing method referred to as sheeting in the art, a continuous quality and reproducibility of the dough and fat amounts and their ratio may be of importance.

Therefore, there remains a need for a device for providing a dough sheet with a layer of fat with a precisely determined composition and quality.

US2022/312780 A1 discloses a device for providing a dough sheet with a layer of fat according to the prior art.

It is a goal of the present invention to provide such device, or at least to provide a useful alternative for the prior art.

The invention thereto proposes a device for providing a dough sheet provided with a layer of fat, comprising a conveyor, such as a conveyor belt, with a conveying surface extending in a longitudinal direction (or length direction) and a transverse direction (or width direction) perpendicular thereto, adapted for displacing goods placed on the conveyor in a conveying direction parallel to the longitudinal direction, a dough-dispensing device for applying a continuous dough sheet on the conveyor, a fat dispensing device for applying a layer of fat wherein the fat is applied on the dough sheet or the dough sheet is applied on the layer of fat and at least one measuring device placed above or along the conveyor for the continuous or random measurement of the local height of the dough sheet at a dough measurement location; and the local height of the layer of fat at a fat measurement location, processing means for determining a measured height of the dough sheet at a position on the dough sheet and a height of the layer of fat at the same position on the dough sheet; and determining the dough-fat height ratio and thus the dough-fat volume ratio.

In order to dispense a layer of fat on a dough sheet, the fat dispensing device may be positioned downstream of the dough dispensing device. Evidently, this order can be the other way round if the dough sheet is to be provided on the layer of fat, and also configurations wherein layers of dough and fat are subsequently placed on top of each other, for instance dough-fat-dough or fat-dough-fat, form part of the present invention.

Where in the following examples are given for a layer of fat disposed on a dough sheet, all configurations where dough is disposed on a layer of fat are also to be comprised.

By measuring the height, a volume can be calculated for a certain width of the dough sheet and the layer of fat, when the speed of the conveyor is known. As will be explained below, the height measurement can take place in various ways, wherein the thickness of the dough sheet and the layer of fat may be measured together, and the thickness of the dough separately, wherein the thickness of the layer of fat is determined based on the difference between both measurements. The conveyor may comprise one or more sections, for instance formed by one or more conveyor belts.

The device may comprise a single measuring device, for measuring at a dough measurement location in the direction of transport the local height of the dough sheet at the dough measurement location and the local height of the layer of fat at the fat measurement location, wherein the measuring device is configured for measuring the local height of the dough sheet and the local height of the layer of fat at a mutual distance in a direction with at least a directional component in the width direction.

Such configuration is applicable in those situations wherein the layer of fat applied on the dough sheet is smaller than the dough sheet, so that at least on one side of the layer of fat a part of the dough sheet extends, that can be measured. The measuring device may in that case take various samples of the height of the combination of the dough sheet with the layer of fat, or perform a continuous height measurement over its measurement range extending in the transverse direction.

Alternatively, the device may comprise at least two measuring devices, for measuring the local height of the dough sheet at a dough measurement location and the local height of the layer of fat at a fat measurement location at at least two locations located at a distance from each other in the direction of transport, relative to the conveyor.

The one or more measuring devices may extend in a transversal direction but it may also extend above or cross the conveyor under an angle.

In such configuration, the first measuring device for measuring the dough height may be placed in between the dough dispensing device and the fat dispensing device, and the second measuring device for measuring the height of the fat layer may be placed downstream of the fat dispensing device in a direction of conveyance of the conveyor. The height of the layer of fat can only be determined indirectly this way, since both the dough sheet and the layer of fat are measured together, and the height of the dough sheet determined by the first measuring device has to be subtracted.

Since the height of the dough sheet is measured on a different location from the location of the layer of fat, in these calculations, the distance between the measuring devices in the direction of conveyance as well as the speed of the conveyor may be taken into account, to relate both measurements to each other. Alternatively, positions on the conveyor may be encoded in order to be related to each other at various locations.

In a further embodiment, the at least one measuring device or both measuring devices are configured for determining the dough sheet height and/or the layer of fat height at several locations in the width direction. This either allows to take an average value of heights in case there are fluctuations between the heights in the width direction, or to use the system in those cases where there is an intentional height difference in the transversal direction, in the dough sheet and/or layer of fat.

In a preferred embodiment, the at least one measuring device comprises a line scanner, which extends across the conveyor in a transversal of width direction. Such scanner can both be used in case where there is one measuring device applied and in case where there are multiple measurement devices applied. The line scanner may in particular embodied by a series of analog (laser) photocells, a laser line scanner, an ultrasonic scanner, or a ccd distance cam, which extends across the conveyor in a width direction.

The device may further comprise a control device for controlling the dough-dispensing device and the fat-dispensing device, on the basis of the determined dough-fat-height ratio and a desired dough-fat-height ratio. In order to obtain a fast-responding feedback-loop, the measuring device or measuring devices are preferably placed as close to the dispensing devices as possible, in particular less than 500 mm after a dispensing device for the dough or fat to be measured.

In a further embodiment, there may be an additional weighing device for measuring the weight of the dough sheet and/or the layer of fat per area unit.

Typically, a dough-dispensing device for use with the present invention may comprise a funnel followed by at least one pair of rollers, and the fat-dispensing device comprises a butter pump.

In a common puff-pastry dough line, the dough-dispensing device and the fat-dispensing device may be adapted for applying a layer of fat with a width that is smaller than the width of the dough layer, wherein the device furthermore comprises a folding device for folding the layer of fat over the dough sheet that extends width-wise beyond the layer of fat. Such device may be followed by a laminating device for forming puff pastry.

In general, the device may be adapted for determining the dough-fat height ratio during transport of the dough sheet with the layer of fat in the direction of transport.

In a further embodiment, the device comprises an additional sample measuring device placed downstream in the direction of transport relative to the at least one measuring device for taking samples from the dough sheet at manually determined occasions, wherein the actual volumes or weights are measured, for instance for calibrating purposes. Alternatively, this sampling may be done manually.

The invention will now be elucidated into more detail with reference to the following figures. Herein:
- Figure 1 shows a schematic representation of a device according to an embodiment of the invention; and
- Figure 2 shows a detail from figure 1.

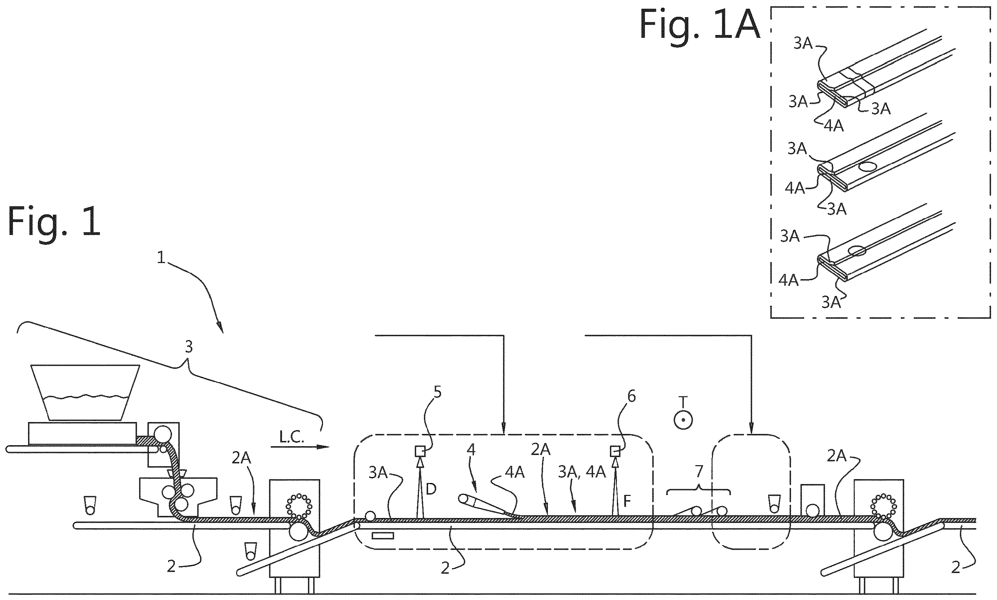

Figure 1 shows a first schematic representation of a device 1 according to an embodiment of the invention, comprising a conveyor belt 2, with a conveying surface 2A extending in a longitudinal direction L and a transverse direction T (disappearing into the drawing) perpendicular thereto, adapted for displacing goods placed on the conveyor 2 in a conveying direction C parallel to the longitudinal direction L. The device comprises a dough-dispensing device 3 for applying a continuous dough sheet 3A on the conveyor 2 and a fat dispensing device 4 for applying a layer of fat 4A on the dough sheet and a first measuring device 5 placed above or along the conveyor 2 for the continuous or random measurement of the local height of the dough sheet 3A at a dough measurement location D; and a second measuring device 6 for the continuous or random measurement of the local height of the layer of fat 4A at a fat measurement location F, as well as processing means (not shown) for determining a measured height of the dough sheet 3A at a position on the dough sheet and a height of the layer of fat 4A at the same position on the dough sheet 4A; and determining the dough-fat height ratio and thus the dough-fat volume ratio. A folding device 7 folds the dough sheet 3A and the layer of fat 4A according to the configuration shown in insert I.

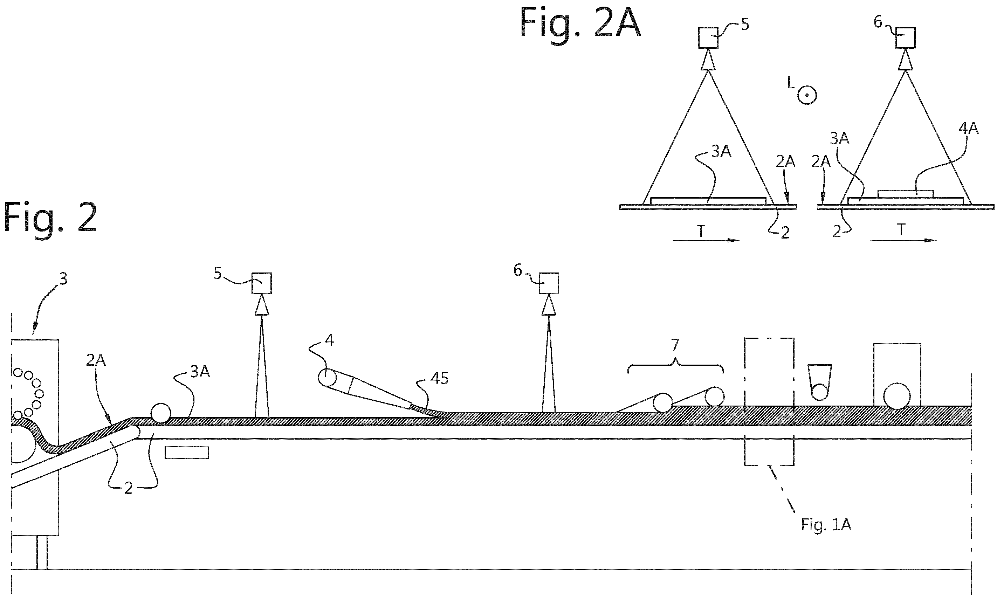

Figure 2 shows the representation from figure 1 in more detail, wherein the same reference numbers show the same items. Visible is a folding device 7 which folds the dough sheet 3A and the layer of fat 4A according to a configuration as visible in the insert I in figure 1. Insert II shows a cross section in the transverse direction of the measuring devices 5 and 6, measuring a dough sheet 3A and the combination of a dough sheet 3A and a layer of fat 4A. An alternative configuration with a single measurement device 6 is thinkable too. In that case, the height of the uncovered dough sheet 3A extending beyond the layer of fat 4A is measured as well as the combined height of the dough sheet 3A and the layer of fat 4A.

The above described embodiments are examples only and do not limit the scope of protection of the present application, as defined in the following claims.

## Claims

1. Device (1) for providing a dough sheet provided with a layer of fat, comprising:
- A conveyor (2), such as a conveyor belt, with a conveying surface extending in a longitudinal direction and a transverse direction perpendicular thereto, adapted for displacing goods placed on the conveyor (2) in a conveying direction parallel to the longitudinal direction;
- A dough-dispensing device (3) for applying a continuous dough sheet on the conveyor (2);
- A fat dispensing device (4) for applying a layer of fat; wherein
- The fat is applied on the dough sheet or the dough sheet is applied on the layer of fat; **characterised in that** the device further comprises:
- At least one measuring device (5, 6) placed above or along the conveyor (2) for the continuous or random measurement of:
∘ the local height of the dough sheet (3A) at a dough measurement location; and
∘ the local height of the layer of fat (4A) at a fat measurement location;
- Processing means for:
∘ Determining a measured height of the dough sheet (3A) at a position the longitudinal direction on the dough sheet (3A) and a height of the layer of fat at the same position on the dough sheet (3A) the longitudinal direction; and
∘ Determining the dough-fat height ratio and thus the dough-fat volume ratio.

2. Device (1) according to claim 1, comprising a single measuring device (5), for measuring at a dough measurement location in the direction of transport:
- the local height of the dough sheet (3A) at the dough measurement location; and
- the local height of the layer of fat (4A) at the fat measurement location, wherein
- the measuring device (5) is configured for measuring the local height of the dough sheet (3A) and the local height of the layer of fat (4A) at a mutual distance in a direction with at least a directional component in the width direction.

3. Device (1) according to claim 1, comprising at least two measuring devices (5, 6), for measuring at at least two locations located at a distance from each other in the direction of transport, relative to the conveyor (2):
- the local height of the dough sheet (3A) at a dough measurement location; and
- the local height of the layer of fat (4A) at a fat measurement location.

4. Device (1) according to any of the preceding claims, wherein the at least one measuring device (5, 6) is configured for determining the dough sheet height and/or the layer of fat (4A) height at several locations in the width direction.

5. Device (1) according to any of the preceding claims, wherein the at least one measuring device (5, 6) comprises a line scanner, in particular embodied by a series of analogue (laser) photocells, a laser line scanner, an ultrasonic scanner, or a ccd distance cam, which extends across the conveyor (2) in a width direction.

6. Device (1) according to any of the preceding claims, comprising:
- a further dough-dispensing device for applying a continuous dough sheet on the combination of a dough sheet (3A) and a layer of fat (4A); or
- a further fat dispensing device for applying a layer of fat on the combination of a dough sheet (3A) and a layer of fat (4A); and
- at least one further measuring device for measuring a subsequent layer of dough or fat (4A).

7. Device (1) according to any of the preceding claims, comprising a control device for controlling the dough-dispensing device and the fat-dispensing device, arranged for controlling the dough dispensing device and the fat dispensing device on the basis of the determined dough-fat-height ratio and a desired dough-fat-height ratio.

8. Device (1) according to any of the preceding claims, comprising a weighing device for measuring the weight of the dough sheet and/or the layer of fat.

9. Device (1) according to any of the preceding claims, wherein the dough-dispensing device comprises a funnel followed by at least one pair of rollers.

10. Device (1) according to any of the preceding claims, wherein the fat-dispensing device comprises a fat pump or vacuum pump.

11. Device (1) according to any of the preceding claims, wherein the dough-dispensing device and the fat-dispensing device are adapted for applying a layer of fat with a width that is smaller than the width of the dough layer, wherein the device furthermore comprises a folding device for folding the layer of fat (4A) over the dough sheet (3A) that extends width-wise beyond the layer of fat.

12. Device (1) according to any of the preceding claims, further comprising a folding and/or laminating device for forming puff pastry.

13. Device (1) according to any of the preceding claims, adapted for determining the dough-fat height ratio during transport of the dough sheet with the layer of fat in the direction of transport.

14. Device (1) according to any of the preceding claims, comprising a sample device placed downstream in the direction of transport relative to the at least one measuring device for manually determining the local height and width or weight of the dough sheet at a dough measuring location and/or the local height and width or weight of the layer of fat at a fat measurement location.

## Patentansprüche

1. Vorrichtung (1) zum Bereitstellen eines mit einer Fettschicht versehenen Teigbandes, aufweisend:
- Einen Förderer (2), wie etwa ein Förderband, mit einer Förderoberfläche, die sich in einer Längsrichtung und in einer Querrichtung senkrecht zu dieser erstreckt, ausgelegt zum Verbringen von auf dem Förderer (2) befindlichen Gütern in einer Förderrichtung parallel zur Längsrichtung;
- Eine Teigabgabevorrichtung (3) zum Aufbringen eines durchgehenden Teigbands auf den Förderer (2);
- Eine Fettabgabevorrichtung (4) zum Aufbringen einer Fettschicht; wobei
- Das Fett auf das Teigband aufgebracht wird oder das Teigband auf die Fettschicht aufgebracht wird;
**dadurch gekennzeichnet, dass** die Vorrichtung ferner aufweist:
- Zumindest eine Messvorrichtung (5, 6), die oberhalb oder entlang des Förderers (2) angeordnet ist, zur ständigen oder zufälligen Messung von:
∘ der örtlichen Höhe des Teigbands (3A) an einer Teigmessstelle; und
∘ der örtlichen Höhe der Fettschicht (4A) an einer Fettmessstelle;
- Verarbeitungsmittel zum:
∘ Ermitteln einer gemessenen Höhe des Teigbands (3A) an einer Stelle in der Längsrichtung des Teigbands (3A) und einer Höhe der Fettschicht an derselben Stelle des Teigbands (3A) in der Längsrichtung; und
∘ Ermitteln des Teig-zu-Fett-Höhenverhältnisses und somit des Teig-zu-Fett-Volumenverhältnisses.

2. Vorrichtung (1) gemäß Anspruch 1, aufweisend eine einzige Messvorrichtung (5), zum Messen an einer Teigmessstelle in der Transportrichtung:
- der örtlichen Höhe des Teigbands (3A) an der Teigmessstelle; und
- der örtlichen Höhe der Fettschicht (4A) an der Fettmessstelle, wobei
- die Messvorrichtung (5) zum Messen der örtlichen Höhe des Teigbandes (3A) und der örtlichen Höhe der Fettschicht (4A) im Abstand zueinander in einer Richtung mit zumindest einer Richtungskomponente in der Breitenrichtung ausgelegt ist.

3. Vorrichtung (1) gemäß Anspruch 1, aufweisend zumindest zwei Messvorrichtungen (5, 6), zum Messen an zumindest zwei Stellen, die zueinander in einem Abstand in der Transportrichtung angeordnet sind, bezogen auf den Förderer (2):
- der örtlichen Höhe des Teigbands (3A) an einer Teigmessstelle; und
- der örtlichen Höhe der Fettschicht (4A) an einer Fettmessstelle.

4. Vorrichtung (1) gemäß einem der vorhergehenden Ansprüche, wobei die zumindest eine Messvorrichtung (5, 6) ausgelegt ist, die Teigbandhöhe und/oder die Höhe der Fettschicht (4A) an mehreren Stellen in der Breitenrichtung zu ermitteln.

5. Vorrichtung (1) gemäß einem der vorhergehenden Ansprüche, wobei die zumindest eine Messvorrichtung (5, 6) einen Linienabtaster aufweist, der insbesondere durch eine Reihe von analogen (Laser-)Photozellen, einen Laserlinienabtaster, einen Ultraschallabtaster oder eine CCD-Abstandskamera verkörpert ist, die sich über den Förderer (2) in einer Breitenrichtung erstreckt.

6. Vorrichtung (1) gemäß einem der vorhergehenden Ansprüche, aufweisend:
- eine weitere Teigabgabevorrichtung zum Aufbringen eines durchgehenden Teigbands auf die Kombination aus einem Teigband (3A) und einer Fettschicht (4A); oder
- eine weitere Fettabgabevorrichtung zum Aufbringen einer Fettschicht auf die Kombination aus einem Teigband (3A) und einer Fettschicht (4A); und
- zumindest einer weiteren Messvorrichtung zum Messen einer Folgeschicht aus Teig oder Fett (4A).

7. Vorrichtung (1) gemäß einem der vorhergehenden Ansprüche, aufweisend eine Steuervorrichtung zum Steuern der Teigabgabevorrichtung und der Fettabgabevorrichtung, eingerichtet zum Steuern der Teigabgabevorrichtung und der Fettabgabevorrichtung auf der Grundlage des ermittelten Teig-zu-Fett-Höhenverhältnisses und eines gewünschten Teig-zu-Fett-Höhenverhältnisses.

8. Vorrichtung (1) gemäß einem der vorhergehenden Ansprüche, aufweisend eine Wägevorrichtung zum Messen des Gewichts des Teigbands und/oder der Fettschicht.

9. Vorrichtung (1) gemäß einem der vorhergehenden Ansprüche, wobei die Teigabgabevorrichtung einen Trichter mit zumindest einem nachfolgendem Paar Walzen aufweist.

10. Vorrichtung (1) gemäß einem der vorhergehenden Ansprüche, wobei die Fettabgabevorrichtung eine Fettpumpe oder Vakuumpumpe aufweist.

11. Vorrichtung (1) gemäß einem der vorhergehenden Ansprüche, wobei die Teigabgabevorrichtung und die Fettabgabevorrichtung ausgelegt sind, eine Fettschicht mit einer Breite aufzubringen, die kleiner als die Breite der Teigschicht ist, wobei die Vorrichtung ferner eine Faltvorrichtung zum Falten der Fettschicht (4A) über das Teigband (3A), welches sich in der Breite über die Fettschicht hinaus erstreckt, aufweist.

12. Vorrichtung (1) gemäß einem der vorhergehenden Ansprüche, ferner aufweisend eine Falt- und/oder Laminiervorrichtung zum Bilden von Blätterteig.

13. Vorrichtung (1) gemäß einem der vorhergehenden Ansprüche, ausgelegt zum Ermitteln des Teig-zu-Fett-Höhenverhältnisses während des Transports des Teigbands mit der Fettschicht in der Transportrichtung.

14. Vorrichtung (1) gemäß einem der vorhergehenden Ansprüche, aufweisend eine Probiervorrichtung, die bezüglich der zumindest einen Messvorrichtung in der Transportrichtung stromabwärts angeordnet ist, um die örtliche Höhe und Breite oder das Gewicht des Teigbands an einer Teigmessstelle und/oder die örtliche Höhe und Breite oder das Gewicht der Fettschicht an einer Fettmessstelle zu ermitteln.

## Revendications

1. Dispositif (1) pour fournir une feuille de pâte pourvue d'une couche de matière grasse, comprenant :
• Un dispositif de transport (2), telle qu'une courroie transporteuse, pourvu d'une surface de transport s'étendant dans une direction longitudinale et une direction transversale perpendiculaire à celle-ci, agencé pour transporter des marchandises placées sur le dispositif de transport (2) dans une direction de transport parallèle à la direction longitudinale ;
• Un premier dispositif de distribution de pâte (3) pour fournir une première feuille de pâte de façon continue sur le dispositif de transport (2) ;
• Un premier dispositif de distribution de matière grasse (4) pour fournir une première couche de matière grasse ;
dans lequel :
• La première couche de matière grasse est appliquée sur la première feuille de pâte, ou la première feuille de pâte est appliquée sur la première couche de matière grasse ;
• Au moins un dispositif de mesure (5, 6) agencé au-dessus, ou le long, du dispositif de transport (2) pour mesurer de façon continue ou aléatoire :
• la hauteur locale de la première feuille de pâte (3A) à un emplacement de mesure de pâte ; et
• la hauteur locale de la première couche de matière grasse (4A) à un emplacement de mesure de matière grasse ;
• un moyen de traitement agencé pour:
• déterminer une hauteur mesurée de la première feuille de pâte (3A) à une position dans la direction longitudinale sur la première feuille de pâte (3A) et une hauteur de la première couche de matière grasse à la même position sur la première feuille de pâte (3A) dans la direction longitudinale ; et
• Déterminer le rapport de hauteur pâte-matière grasse et ainsi le rapport de volume pâte-matière grasse.

2. Dispositif (1) selon la revendication 1, comprenant un seul dispositif de mesure (5), pour mesurer à un emplacement de mesure de pâte dans la direction de transport :
• la hauteur locale de la première feuille de pâte (3A) à l'emplacement de mesure de pâte ; et
• la hauteur locale de la première couche de matière grasse (4A) à l'emplacement de mesure de matière grasse, dans lequel :
• le dispositif de mesure (5) est configuré pour mesurer la hauteur locale de la première feuille de pâte (3A) et la hauteur locale de la première couche de matière grasse (4A) à une distance mutuelle dans une direction avec au moins une composante directionnelle dans la direction de la largeur.

3. Dispositif (1) selon la revendication 1, comprenant au moins deux dispositifs de mesure (5, 6), pour mesurer à au moins deux emplacements situés à une distance l'un de l'autre dans la direction de transport, par rapport au dispositif de transport (2) :
• la hauteur locale de la première feuille de pâte (3A) à un emplacement de mesure de pâte ; et
• la hauteur locale de la première couche de matière grasse (4A) à un emplacement de mesure de matière grasse.

4. Dispositif (1) selon l'une quelconque des revendications précédentes, dans lequel le, ou au moins l'un des, dispositif(s) de mesure (5, 6) est agencé pour déterminer la hauteur de la première feuille de pâte, et/ou la hauteur de la première couche de matière grasse (4A), à plusieurs emplacements dans la direction de la largeur.

5. Dispositif (1) selon l'une quelconque des revendications précédentes, dans lequel le, ou au moins l'un des, dispositif(s) de mesure (5, 6) comprend un scanner de ligne, par exemple formée d'une pluralité de cellules photoélectriques (laser) analogiques, un scanner de ligne laser, un scanner ultrasonique, ou une caméra de distance de type CCD, qui s'étend à travers le dispositif de transport (2) dans une direction de la largeur.

6. Dispositif (1) selon l'une quelconque des revendications précédentes, comprenant :
• un second dispositif de distribution de pâte pour fournir une seconde feuille de pâte continue sur la combinaison de la première feuille de pâte (3A) et de la première couche de matière grasse (4A) ; ou
• un second dispositif de distribution de matière grasse pour fournir une seconde couche de matière grasse sur la combinaison de la première feuille de pâte (3A) et de la première couche de matière grasse (4A) ; et
• au moins un dispositif de mesure supplémentaire pour mesurer une couche ultérieure de pâte ou de matière grasse (4A).

7. Dispositif (1) selon l'une quelconque des revendications précédentes, comprenant un dispositif de contrôle pour contrôler le premier dispositif de distribution de pâte et le premier dispositif de distribution de matière grasse, agencé pour contrôler le premier dispositif de distribution de pâte et le premier dispositif de distribution de matière grasse en fonction du rapport de hauteur pâte-matière grasse mesuré et d'un rapport de hauteur pâte-matière grasse prédéterminé.

8. Dispositif (1) selon l'une quelconque des revendications précédentes, comprenant un dispositif de pesage pour mesurer le poids de la première feuille de pâte et/ou de la première couche de matière grasse.

9. Dispositif (1) selon l'une quelconque des revendications précédentes, dans lequel le premier dispositif de distribution de pâte comprend un entonnoir et d'au moins une paire de rouleaux.

10. Dispositif (1) selon l'une quelconque des revendications précédentes, dans lequel le premier dispositif de distribution de matière grasse comprend une pompe à matière grasse ou une pompe à vide.

11. Dispositif (1) selon l'une quelconque des revendications précédentes, dans lequel le premier dispositif de distribution de pâte et le premier dispositif de distribution de matière grasse sont agencés pour appliquer une première couche de matière grasse avec une largeur qui est plus petite que la largeur de la première couche de pâte, dans lequel le dispositif comprend en outre un dispositif de pliage pour plier la première couche de matière grasse (4A) sur la première feuille de pâte (3A) qui s'étend en largeur au-delà de la première couche de matière grasse.

12. Dispositif (1) selon l'une quelconque des revendications précédentes, comprenant en outre un dispositif de pliage et/ou de laminage pour former une pâte feuilletée.

13. Dispositif (1) selon l'une quelconque des revendications précédentes, agencé pour déterminer le rapport de hauteur pâte-matière grasse pendant le transport de la première feuille de pâte avec la première couche de matière grasse dans la direction de transport.

14. Dispositif (1) selon l'une quelconque des revendications précédentes, comprenant un dispositif d'échantillonnage placé en aval dans la direction de transport par rapport à le, ou au moins l'un des, dispositif(s) pour déterminer manuellement la hauteur et la largeur locales, ou le poids, de la première feuille de pâte à un emplacement de mesure de pâte et/ou la hauteur et la largeur locales, ou le poids, de la première couche de matière grasse à un emplacement de mesure de matière grasse.
